# EUROPÄISCHE PATENTANMELDUNG

(11) **EP 4 122 891 A1**
(43) Veröffentlichungstag der Anmeldung: **25.01.2023**
(21) Anmeldenummer: 22180634.2
(22) Anmeldetag: 23.06.2022
(51) Int. Cl.: C02F 1/00, C02F 1/32, C02F 1/36, C02F 1/44, B01D 61/14, B01D 61/20, B01D 65/02

(54) **SYSTEM ZUM REINIGEN VON TRINKWASSER**

(30) Priorität: 25.06.2021 DE 102021116547
(71) Anmelder: Solvis GmbH, 38112 Braunschweig (DE)
(72) Erfinder: JÄGER, Helmut, 38112 Braunschweig (DE); FORM, Jochen, 38112 Braunschweig (DE); LOBAS, Daniel, 38112 Braunschweig (DE); EICHHOFF, Julian, 38112 Braunschweig (DE)
(74) Vertreter: Gramm, Lins & Partner Patent- und Rechtsanwälte PartGmbB

(57) **Zusammenfassung**

Die Erfindung betrifft ein System zum Reinigen von Trinkwasser, wobei das System wenigstens einen Feinfilter (4) und wenigstens ein Reinigungsmodul (16) zum Reinigen des Feinfilters (4) aufweist, wobei das System zudem wenigstens ein Desinfektionsmodul (8) mit wenigstens einer UV-Strahlungsquelle (10), das in Strömungsrichtung hinter dem Feinfilter (4) angeordnet ist, und wenigstens ein Rückführungsmodul (30) aufweist, durch das Wasser von in Strömungsrichtung hinter dem Desinfektionsmodul (8) nach in Strömungsrichtung vor dem Desinfektionsmodul (8) leitbar ist.

## Beschreibung

Die Erfindung betrifft ein System zum Reinigen von Trinkwasser, wobei das System wenigstens einen Feinfilter und wenigstens ein Reinigungsmodul zum Reinigen des Feinfilters aufweist.

Ein solches System ist beispielsweise aus der EP 1 110 589 B1 bekannt. Das Reinigungsmodul ist in Form einer Rückspüleinrichtung ausgebildet. Beim Reinigen des Trinkwassers wird das Trinkwasser durch den Feinfilter, der vorzugsweise ein mechanischer Feinfilter, beispielsweise ein Sieb, ist, hindurchgeleitet. Dabei bleiben Verunreinigungen am Feinfilter hängen und werden so herausgefiltert. Insbesondere bei einem lang andauernden Betrieb des Feinfilters kann es daher dazu kommen, dass die Poren oder Maschen des Feinfilters verstopfen und so die Durchflussmenge reduziert und der durch den Feinfilter erzeugte Strömungswiderstand erhöht wird. Um dies zu verhindern ist die Rückspüleinrichtung vorhanden, durch die Wasser auf dem umgekehrten Weg durch den Feinfilter hindurchgeleitet wird. Das am Feinfilter befindliche Verunreinigungsmaterial wird so vom Feinfilter entfernt und durch einen separaten Abfluss, der vorzugsweise Teil des Reinigungsmodul ist, aus dem System entfernt. Danach ist das System wieder einsatzbereit.

Derartige Systeme werden insbesondere an Hauseingängen von Gebäuden zum Schutz der Installation und der verwendeten Anlagen und Armaturen eingesetzt. Typische Maschenweiten der Feinfilter liegen beispielsweise im Bereich von 100 µm. Eine Maschenweite von weniger als 80 µm kann problematisch sein, da die aus dem Stand der Technik bekannte Reinigung durch Rückspülung, wie sie aus dem oben genannten Stand der Technik bekannt ist, in diesem Fall gegebenenfalls nicht ausreicht, um die Konzentration von Bakterien und/oder Partikeln im Filtergewebe des Feinfilters zu verhindern. Bei größeren Maschen wird mit einem derartigen System das Trinkwasser gut und ausreichend von Feststoffen, wie beispielsweise Sand oder Rost, gereinigt.

Durch einen Hausanschluss wird kaltes Trinkwasser in die Installation und die Anlage des Gebäudes eingespeist. Die Temperatur des eingespeisten Trinkwassers, die sogenannte Kaltwassertemperatur, ist dabei in den letzten Jahren angestiegen. Dies ist einerseits durch den Klimawandel bedingt, der dazu führt, dass insbesondere in den Sommermonaten die Kaltwassertemperaturen auf Werte von über 20 °C ansteigen können. Dies ist als hygienisch bedenklich zu bewerten. Zudem steigen auch im Gebäude die Raum- und Bauteiltemperaturen insbesondere durch die verstärkte Dämmung moderner Gebäude. Auch bei vorschriftsmäßiger Rohrdämmung innerhalb des Gebäudes ist es oftmals nicht zu vermeiden, dass die Kaltwassertemperaturen 25 °C und somit den zulässigen Grenzwert überschreiten.

Um hygienische Unbedenklichkeit weiterhin gewährleisten zu können, ist es daher notwendig, das Kaltwasser am Hauseingang nicht nur von unerwünschten Partikeln, sondern auch von pathogenen Bakterien und Amöben zu reinigen, um insbesondere deren Vermehrung im Innern des Gebäudes zu verhindern. Dies wird beispielsweise durch Ultrafiltrationssysteme erreicht, deren Filtermodule eine Maschenweite oder Porenweite von 20 bis 30 nm aufweisen und somit alle Bakterien zuverlässig aus dem Wasser entfernen. Nachteilig sind allerdings die hohen Investitionskosten sowie der hohe Aufwand bei Betrieb und Wartung. Insbesondere bei Einfamilienhäusern und kleineren Mehrfamilienhäusern von beispielsweise weniger als 20 Wohneinheiten lohnen sich derartige Investitionen in der Regel nicht.

Aus dem Stand der Technik sind zudem Systeme bekannt, die über ein Elektrolysemodul mit separater Spannungsquelle verfügen. Beim Reinigen des Feinfilters wird eine elektrische Potenzialdifferenz angelegt, die einerseits dazu führt, dass sauerstoffhaltige Spezies mit keimtötender Wirkung, beispielsweise Ozon, entstehen oder im Wasser enthaltene Chlorid-Ionen zu desinfizierend wirkenden Spezies, wie beispielsweise Chlor oder unterchlorige Säure, umgewandelt werden. Ein solches System ist Beispielweise aus der EP 3 002 254 B1 bekannt. Nachteilig ist jedoch, dass die enthaltenen Spezies bei nicht vollständiger Umsetzung im Trinkwasser verbleiben.

Der Erfindung liegt daher die Aufgabe zugrunde, ein System gemäß dem Oberbegriff des Anspruchs 1 so zu verbessern, dass die Nachteile aus dem Stand der Technik behoben oder zumindest vermindert werden.

Die Erfindung löst die gestellte Aufgabe durch ein System gemäß dem Oberbegriff des Anspruchs 1, des zudem wenigstens ein Desinfektionsmodul mit wenigstens einer UV-Strahlungsquelle, dass in Strömungsrichtung hinter dem Feinfilter angeordnet ist, und wenigstens ein Rückführungsmodul aufweist, durch das Wasser von den Strömungsrichtung hinter dem Desinfektionsmodul nach in Strömungsrichtung vor dem Desinfektionsmodul ableitbar ist.

Das Desinfektionsmodul verfügt über wenigstens eine UV-Strahlungsquelle, die so angeordnet und ausgerichtet ist, dass das durch das System geleitete Trinkwasser, das gereinigt werden soll, von der ausgesandten UV-Strahlung der UV-Strahlungsquelle getroffen und bestrahlt wird. Die Strahlung desinfiziert das Trinkwasser von Legionellen, coliformen Bakterien und weiteren pathogenen Bakterien durch Beschädigung derer DNA. Durch ein solches System wird Trinkwasser jedoch nur dann geleitet, wenn ein Verbraucher auf der Strom abwärtsliegenden Seite des Systems Wasser entnimmt. Dies kann beispielsweise ein Haushaltsgerät, beispielsweise eine Waschmaschine oder ein Geschirrspüler, oder ein Bewohner des Hauses sein, der beispielsweise duscht oder badet. Für den Fall, dass zu einem bestimmten Zeitpunkt kein Wasser entnommen wird und somit auch kein Trinkwasser durch das System hindurch geleitet wird, ist es von Vorteil, wenn die UV-Strahlungsquelle keine UV-Strahlung aussendet. Um zu verhindern, dass in diesem Fall im System stehendes Trinkwasser zu einem hygienischen Problem wird, verfügt das System über das Rückführungsmodul. Durch dieses Rückführungsmodul wird Trinkwasser, das das System bereits einmal durchlaufen hat, sich also in Strömungsrichtung hinter dem Desinfektionsmodul befindet, am Desinfektionsmodul vorbei wieder vor das Desinfektionsmodul geleitet, sodass es dieses erneut durchläuft. Auf diese Weise ist sichergestellt, dass sich das Wasser, das sich stromabwärts des Systems befindet, wenigstens einmal mit der UV-Strahlung der UV-Strahlungsquelle bestrahlt wurde.

Vorzugsweise verfügt das Rückführungsmodul über wenigstens eine Rückführungsleitung und eine Pumpe, vorzugsweise eine Umwälzpumpe. Durch die Pumpe wird Wasser in die Rückführungsleitung und insbesondere durch die Rückführungsleitung hindurchgeleitet. Die Rückführungsleitung erstreckt sich vorzugsweise am Desinfektionsmodul vorbei, kann jedoch auch länger ausgebildet sein und das Wasser auch noch am Feinfilter vorbeiführen.

Vorzugsweise ist die Pumpe in einem Pumpengehäuse untergebracht, das Teil eines Gesamtgehäuses des Systems ist oder in diesem angeordnet ist. Besonders bevorzugt ist auch die Rückführungsleitung in dem Gesamtgehäuse angeordnet.

In einer bevorzugten Ausgestaltung verfügt das Reinigungsmodul über wenigstens einen Ultraschallkopf, der eingerichtet ist, zumindest einen Teil des Feinfilters mit Vibrationen zu beaufschlagen. Dadurch wird die Reinigungswirkung des Reinigungsmoduls verbessert und der Feinfilter besser gereinigt, ohne dass gegebenenfalls gesundheitsschädliche Chemikalien entstehen.

Vorzugsweise verfügt das Reinigungsmodul über wenigstens einen mechanischen Schaber, der zum Reinigen des Feinfilters mit diesem in Kontakt ist. Dabei ist es nicht nötig, dass der Schaber beim Reinigen des Feinfilters eine Bewegung auf diesem Feinfilter ausführt. Dies ist eine vorteilhafte jedoch nicht notwendige Ausgestaltung. Prinzipiell ist es auch denkbar, dass beispielsweise der Feinfilter relativ zu dem Schaber bewegt wird. Der Schaber kann mehrere Öffnungen aufweisen, durch die das Wasser geleitet wird, die beispielsweise nacheinander geöffnet oder mit einem Druck oder Unterdruck beaufschlagt werden können.

Alternativ oder zusätzlich zu dieser Bewegung verfügt der Schaber über wenigstens eine Ablauföffnung, durch die Wasser durch den Feinfilter geleitet werden kann.

Dabei entfernt es am Feinfilter befindliche Partikel und Verschmutzungen. Dazu wird das Wasser vorzugsweise in der entgegengesetzten Richtung durch den Feinfilter geleitet, in der es beim Reinigen den Feinfilter durchdrungen hat. Man spricht daher in diesem Zusammenhang von einer Rückspülung. Vorzugsweise wird das Wasser durch die Ablauföffnung gedrückt. Dazu ist es vorzugsweise ausreichend, einen Verschluss der Ablauföffnung, beispielsweise ein Ventil, zu öffnen. Der an der Zuleitung anstehende Wasserdruck drückt dann Wasser durch die Ablauföffnung in den Schaber und spült so der Feinfilter.

In einer bevorzugten Ausgestaltung weist der Schaber ein Kontaktelement, insbesondere eine Andruckrolle und/oder eine Lippe aus einem elastischen Material, vorzugsweise Gummi, auf. Dieses kommt zum Reinigen des Feinfilters mit diesem in Kontakt, so dass auch eine mechanische Reinigung stattfinden kann. Vorzugsweise ist das Kontaktelement eingerichtet, Amöben, die sich an dem Feinfilter befinden, mechanisch zu zerstören, so dass die darin befindlichen Mikroorganismen, insbesondere Legionellen, der Bestrahlung durch UV-Strahlung zugänglich werden und unschädlich gemacht werden können.

Vorzugsweise verfügt der Feinfilter über eine Porengröße von weniger als 80 µm, bevorzugt weniger als 50 µm, besonders bevorzugt weniger als 5 µm.

Vorteilhafter Weise weist das System eine elektrische Steuerung, beispielsweise einen Mikrocomputer, auf, die eingerichtet ist, Wasser durch das Rückführungsmodul zuleiten, wenn für eine vorbestimmte Zeitspanne kein Wasser durch das System geleitet wurde. Dazu ist die elektrische Steuerung eingerichtet, beispielsweise die Pumpe des Rückführungsmodul zu steuern und insbesondere zu betreiben. Bevorzugt verfügt das System über wenigstens einen Sensor, der Messwerte aufnimmt, aus denen ermittelt werden kann, ob Wasser durch das System hindurchgeleitet wird. Insbesondere ist den Messwerten zu entnehmen, wann kein Wasser durch das System hindurch geführt wird. In einem vorzugsweise elektronischen Datenspeicher ist eine vorbestimmte Zeitspanne hinterlegt, wobei die elektrische Steuerung Zugriff auf diesen Datenspeicher hat. Sobald für eine Dauer, die länger als die vorbestimmte Zeitspanne ist, kein Wasser durch das System hindurchgeleitet wurde, sendet die elektrische Steuerung Steuerbefehle an die Pumpe, die daraufhin Wasser durch die Rückführungsleitung hindurchgeleitet. Dadurch kommt es zu einer Umwälzung des Wassers innerhalb des Systems. Vorzugsweise steuert die elektrische Steuerung gleichzeitig die UV-Strahlungsquelle, sodass das Wasser, das nun durch das System strömt, mit der UV-Strahlung bestrahlt wird. Besonders bevorzugt ist der Sensor geeignet, zu ermitteln, ob Wasser durch das Desinfektionsmodul geleitet wird.

Die wenigstens eine UV-Strahlungsquelle verfügt über wenigstens eine UV-LED. Diese liefern nach dem Einschalten besonders schnell die notwendige UV-Strahlungsdosis.

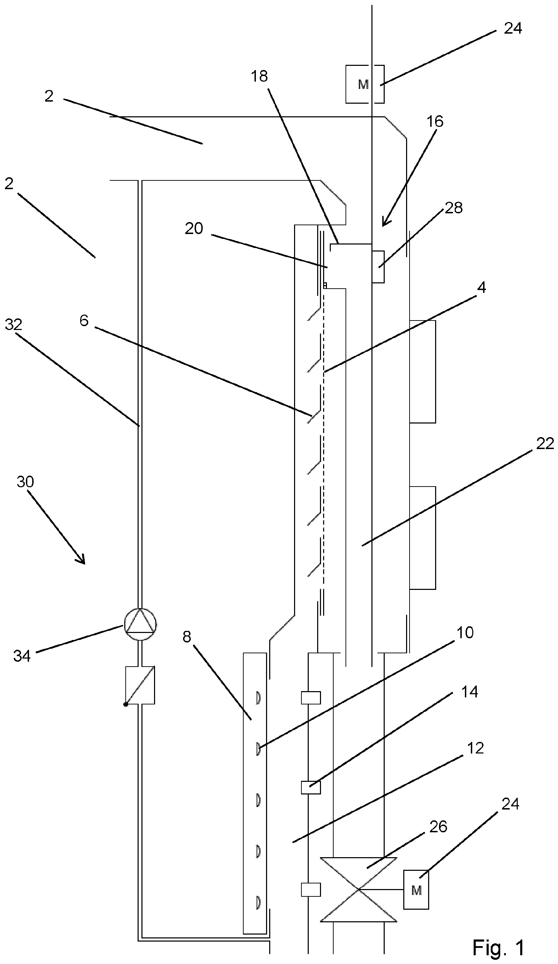

Mithilfe der beigefügten Zeichnung wird nachfolgend ein Ausführungsbeispiel der vorliegenden Erfindung näher erläutert. Es zeigt
- Figur 1: - die schematische Darstellung eines Systems gemäß einem Ausführungsbeispiel der vorliegenden Erfindung.

Figur 1 zeigt schematisch ein System gemäß einem Ausführungsbeispiel der vorliegenden Erfindung. Über eine Zuleitung 2 wird Wasser in das System eingeleitet, das gereinigt werden soll. Das System verfügt über einen Feinfilter 4, der im gezeigten Ausführungsbeispiel als Netz oder Sieb ausgebildet ist. Durch eine Stützstruktur 6 für den Feinfilter 4 wird das Wasser dann im gezeigten Ausführungsbeispiel nach unten geleitet, wo es einem Desinfektionsmodul 8 zugeführt wird. Das Desinfektionsmodul 8 weist mehrere UV-Strahlungsquellen 10 auf, die im gezeigten Ausführungsbeispiel als UV-LEDs ausgebildet sind. Das Wasser strömt durch einen Desinfektionskanal 12, in dem es von der UV-Strahlung der UV-Strahlungsquellen 10 getroffen wird. Auf der gegenüberliegenden Seite des Desinfektionskanals 12 sind UV-Sensoren 14 positioniert, um die Funktion der UV-Strahlungsquelle 10 zu überwachen. Diese können, anders als im gezeigten Ausführungsbeispiel auch zwischen den Strahlungsquellen 10 angeordnet sein.

Wird Wasser durch das System geleitet, tritt dieses Wasser am Ende des Desinfektionskanals 12 aus dem System aus. Zum Reinigen des Feinfilters 4 verfügt das System über ein Reinigungsmodul 16. Dieses Reinigungsmodul weist einen Schaber 18 auf, der beim Reinigen des Feinfilters 4 mit diesem in Kontakt kommt. Er weist eine Ablauföffnung 20 auf. Durch diese Ablauföffnung 20wird Wasser aus dem Bereich in Strömungsrichtung hinter dem Feinfilter 4 durch den Feinfilter 4 hindurch geleitet. Über eine zusätzliche Ablaufleitung 22 wird das Wasser dann gesteuert von einem Motor 24, der eine Pumpe oder ein Ventil 26 steuert aus dem System entfernt. Das Reinigungsmodul 16 kann zudem über eine Ultraschallquelle 28 verfügen, die durch einen weiteren Motor 24 betrieben wird. Da die Ultraschallquellen 28 direkt auf dem Schaber 18 angeordnet ist, versetzt sie diesen unmittelbaren Schwingungen, die die Reinigung des Feinfilters erleichtern.

Für den Fall, dass für einen längeren Zeitraum kein Wasser durch das System geleitet wird, verfügt das System über ein Rückführungsmodul 30, das eine Rückführungsleitung 32 und eine Pumpe 34 aufweist. Wird beispielsweise über einen nicht dargestellten Sensor festgestellt, dass für einen bestimmten Zeitraum kein Wasser durch das System geflossen ist, wird die Pumpe 34 durch eine elektrische Steuerung angesteuert, die ebenfalls nicht dargestellt ist. Die Pumpe 34 pumpt Wasser durch die Rückführungsleitung 32 von einer Position in Strömungsrichtung hinter dem Desinfektionsmodul 8 zu einer Position in Strömungsrichtung vor dem Desinfektionsmodul 8. Im gezeigten Ausführungsbeispiel wird das Wasser direkt in die Zuleitung 2 gepumpt. Da dabei Wasser von einer Position in Strömungsrichtung hinter dem Desinfektionsmodul 8 entnommen wird, fließt das Wasser nach und strömt dabei durch den Feinfilter 4. Gleichzeitig mit dem Betrieb der Pumpe 32 sorgt die elektrische Steuerung auch dafür, dass die UV-Strahlungsquellen 10 betrieben werden und UV-Strahlung erzeugt wird, mit der das Wasser bestrahlt wird.

### Bezugszeichenliste

- 2: Zuleitung
- 4: Feinfilter
- 6: Stützstruktur
- 8: Desinfektionsmodul
- 10: UV-Strahlungsquelle
- 12: Desinfektionskanals
- 14: UV-Sensor
- 16: Reinigungsmodul
- 18: Schaber
- 20: Ablauföffnung
- 22: Ablaufleitung
- 24: Motor
- 26: Ventil
- 28: Ultraschall
- 30: Rückführungsmodul
- 32: Rückführungsleitung
- 34: Pumpe

## Patentansprüche

1. System zum Reinigen von Trinkwasser, wobei das System
- wenigstens einen Feinfilter (4) und
- wenigstens ein Reinigungsmodul (16) zum Reinigen des Feinfilters (4) aufweist,
**dadurch gekennzeichnet, dass** das System zudem
- wenigstens ein Desinfektionsmodul (8) mit wenigstens einer UV-Strahlungsquelle (10), das in Strömungsrichtung hinter dem Feinfilter (4) angeordnet ist, und
- wenigstens ein Rückführungsmodul (30) aufweist, durch das Wasser von in Strömungsrichtung hinter dem Desinfektionsmodul (8) nach in Strömungsrichtung vor dem Desinfektionsmodul (8) leitbar ist.

2. System nach Anspruch 1, **dadurch gekennzeichnet, dass** das Rückführungsmodul (30) wenigstens eine Rückführungsleitung (32) und eine Pumpe (34) aufweist.

3. System nach Anspruch 1 oder 2, **dadurch gekennzeichnet, dass** das Reinigungsmodul (8) wenigstens einen Ultraschallkopf (28) aufweist, der eingerichtet ist, zumindest einen Teil des Feinfilters (4) mit Vibrationen zu beaufschlagen.

4. System nach einem der vorstehenden Ansprüche, **dadurch gekennzeichnet, dass** das Reinigungsmodul (8) einen mechanischen Schaber (18) aufweist, der zum Reinigen des Feinfilters (4) mit diesem in Kontakt ist.

5. System nach Anspruch 4, **dadurch gekennzeichnet, dass** der Schaber (18) eine Ablauföffnung (20) aufweist, durch die Wasser durch den Feinfilter (4) leitbar ist.

6. System nach Anspruch 4 oder 5, **dadurch gekennzeichnet, dass** der Schaber ein Kontaktelement, insbesondere eine Andruckrolle und/oder eine Lippe aus einem elastischen Material, vorzugsweise Gummi, aufweist.

7. System nach einem der vorstehenden Ansprüche, **dadurch gekennzeichnet, dass** der Feinfilter (4) eine Porengröße von weniger als 80 µm, bevorzugt weniger als 50 µm, besonders bevorzugt weniger als 5 µm aufweist.

8. System nach einem der vorstehenden Ansprüche, **dadurch gekennzeichnet, dass** das System eine elektrische Steuerung aufweist, die eingerichtet ist, Wasser durch das Rückführungsmodul (30) zu leiten, wenn für eine vorbestimmte Zeitspanne kein Wasser durch das System geleitet wurde.

9. System nach Anspruch 7, **dadurch gekennzeichnet, dass** die elektrische Steuerung eingerichtet ist, die wenigstens eine UV-Strahlungsquelle (10) zu betreiben, wenn Wasser durch das System geleitet wird oder wenn Wasser durch das Rückführungsmodul (30) geleitet wird.

10. System nach einem der vorstehenden Ansprüche, **dadurch gekennzeichnet, dass** die wenigstens eine UV-Strahlungsquelle (10) wenigstens einen UV-LED aufweist.
